# EUROPÄISCHE PATENTSCHRIFT

(11) **EP 2 511 030 B1**
(45) Veröffentlichungstag und Bekanntmachung des Hinweises auf die Patenterteilung: **08.05.2019**
(21) Anmeldenummer: 11167147.5
(22) Anmeldetag: 23.05.2011
(51) Int. Cl.: B22F 3/105, B22F 5/00, B22F 5/04, B22F 7/06, F01D 5/18, F01D 9/06, F01D 9/04, B33Y 80/00, B33Y 10/00

(54) **VERFAHREN ZUM HERSTELLEN EINES BAUTEILS MIT WENIGSTENS EINEM IN DEM BAUTEIL ANGEORDNETEN BAUELEMENT, SOWIE EIN BAUTEIL MIT WENIGSTENS EINEM BAUELEMENT**
METHOD FOR PRODUCING A COMPONENT WITH AT LEAST ONE CONSTRUCTION ELEMENT IN THE COMPONENT AND A COMPONENT WITH AT LEAST ONE CONSTRUCTION ELEMENT
PROCÉDÉ DE FABRICATION D'UN COMPOSANT DOTÉ D'AU MOINS UN ÉLÉMENT DE CONSTRUCTION AGENCÉ DANS LE COMPOSANT ET COMPOSANT DOTÉ D'AU MOINS UN ÉLÉMENT DE CONSTRUCTION

(30) Priorität: 15.04.2011 EP 11162568
(43) Veröffentlichungstag der Anmeldung: 17.10.2012
(73) Patentinhaber: MTU Aero Engines AG, 80995 München (DE)
(72) Erfinder: Geiger, Peter, 80997 München (DE)

(56) Entgegenhaltungen:
- DE-A1-102006 049 218
- US-A1- 2010 275 572

## Beschreibung

Die vorliegende Erfindung betrifft ein Verfahren zum Herstellen eines Bauteils mit wenigstens einem in dem Bauteil angeordneten Bauelement, nämlich einer aerodynamischen Rippe eines Turbinenanschlussgehäuses einer Gasturbine eines Flugzeugtriebwerks mit wenigstens einer Leitung, einem Leitungsteil mit wenigstens einer Leitung oder einem Stützelement als Bauelement, sowie ein Bauteil mit wenigstens einem Bauelement.

Aus der DE 10 2006 062 373 A1 ist ein Steuerblock in metallischer Leichtbauweise bekannt, zur Realisierung einer pneumatischen oder hydraulischen Schaltung. Der Steuerblock wird mit Kavitäten zur Aufnahme von Einbauventilen, sowie mit Rohrleitungen mittels generativer Fertigung hergestellt.

Des Weiteren ist aus der DE 10 2006 049 216 A1 ein Hochdruckturbinen-Rotor bekannt, welcher als Blisk gestaltet ist und eine radial innen angeordnete Scheibe sowie mehrere von dieser Scheibe abragende Schaufelblätter ausbildet. Die Schaufelblätter werden mittels eines generativen Herstellungsverfahrens aufgebaut. In Bereichen von Kanälen erfolgt in den schichtweisen Querschnitten keine Verfestigung, so dass anschließend das Pulver in diesen Bereich zur der Bildung der entsprechenden Kanäle ausgeblasen werden kann.

Aus der US 2010/0275572 A1 ist ein Turbinenzwischengehäuse mit einer aerodynamischen Rippe bekannt, durch die eine Leitung geführt ist.

In der DE 10 2006 049 218 A1 ist des Weiteren ein Verfahren zur Herstellung eines Gasturbinenbauteils offenbart. Dabei wird ein Gasturbinenbauteil im Sinne einer Sandwichstruktur hergestellt, bei welcher die Außenwände integraler Bestandteil der Gesamtstruktur des herzustellenden Gasturbinenbauteils sind und mit der die Hohlräume definierenden Innenstruktur materialschlüssig verbunden sind.

Vor diesem Hintergrund liegt der Erfindung nun die Aufgabe zugrunde, ein verbessertes Verfahren zur Herstellung eines Bauteils, nämlich einer aerodynamisch konturierten Rippe bereitzustellen, welche wenigstens ein Bauelement oder eine Leitung aufweist, das durch das Bauteil hindurchgeführt ist.

Gemäß der Erfindung wird ein Verfahren nach Anspruch 1 bereitgestellt zum Herstellen eines Bauteils mit wenigstens einem in dem Bauteil angeordneten Bauelement, nämlich wenigstens einer in einer aerodynamischen Rippe angeordneten Leitung, einem Leitungsteil oder einem Stützelement, wobei das Bauteil eine Bauelementdurchführung aufweist zum Hindurchführen des wenigstens einen Bauelements, wobei das Verfahren die folgenden Schritte aufweist:
Schichtweises Aufbauen des Bauteils mit der Bauelementdurchführung zusammen mit dem wenigstens einen Bauelement mittels eines generativen Fertigungsverfahrens und
Ausbilden des wenigstens einen Bauelements an beiden Enden desselben mit einem Anschlussabschnitt und/oder einem Befestigungsflansch, wobei der Anschlussabschnitt bzw. der Befestigungsflansch einen größeren Querschnitt oder einen größeren Durchmesser als die Bauelementdurchführung des Bauteils aufweist.

Das Verfahren hat den Vorteil, dass das Bauelement, nämlich eine Leitung oder ein Stützelement, zusammen mit dem Bauteil ausgebildet wird, so dass das Bauteil mit seiner Bauelementdurchführung nicht vorab derart groß dimensioniert werden muss, dass später das Bauelement durch die Bauelementdurchführting hindurch gesteckt werden kann.

Vorteilhafte Ausgestaltungen und Weiterbildungen der Erfindung ergeben sich aus den Unteransprüchen sowie der Beschreibung unter Bezugnahme auf die Zeichnungen.

In einer erfindungsgemäßen Ausführungsform wird ein Zwischenraum zwischen der Bauelementdurchführung und dem wenigstens einen Bauelement ausgebildet, beispielsweise ein teilweise oder vollständig umlaufender Zwischenraum oder Spalt. Dies hat den Vorteil, dass das Bauelement die Bauelementdurchführung und damit das Bauteil nicht berührt und so beispielsweise im Falle eines heißen Bauteils, das Bauelement, z.B. eine Leitung, nicht in Kontakt mit dem heißen Bauteil kommt.

In einer anderen erfindungsgemäßen Ausführungsform wird eine Haltestruktur an dem Bauelement und/oder dem Bauteil zum Positionieren des Bauelements in der Bauelementdurchführung des Bauteils in einer vorbestimmten Position vorgesehen. Dadurch kann das Bauteil derart ausgebildet werden, dass das Bauelement darin bereits die gewünschte oder vorgesehene Position aufweist.

Eine weitere erfindungsgemäße Ausführungsform umfasst das Ausbilden wenigstens einer Strukturrippe zwischen der Bauelementdurchführung des Bauteils und dem wenigstens einen Bauelement. Dadurch kann die Struktur der Bauelementdurchführung und des Bauteils zusätzlich verstärkt und außerdem beide Teile zueinander fixiert werden und andererseits beispielsweise eine unerwünschte Wärmeübertragung zwischen einem heißen Bauteil und dem Bauteil, z.B. einer Leitung, minimiert werden.

Eine andere erfindungsgemäße Ausführungsform umfasst das zumindest teilweise Auffüllen des Zwischenraums oder Spalts zwischen der Bauelementdurchführung des Bauteils und dem Bauelement mit einem Isolationsmaterial. Dadurch kann beispielsweise das Bauelement zusätzlich gegenüber dem Bauteil und seiner Bauelementdurchführung isoliert werden.

Eine weitere erfindungsgemäße Ausführungsform umfasst das Ausbilden des Zwischenraums oder Spalts zwischen der Bauelementdurchführung des Bauteils und dem wenigstens einen Bauteil in zumindest teilweise oder vollständig umlaufender Weise um das Bauelement. Der Zwischenraum oder Spalt wirkt als Isolation zwischen dem Bauelement und der Bauelementdurchführung des Bauteils.

Erfindungsgemäß umfasst das Ausbilden des wenigstens einen Bauelements an beiden Enden derselben mit einem Anschlussabschnitt oder einem Befestigungsflansch, wobei der Anschlussabschnitt bzw. der Befestigungsflansch einen größeren Querschnitt oder Durchmesser als die Bauelementdurchführung des Bauteils aufweist. Dies hat den Vorteil, dass das Bauteil mit seiner Bauelementdurchführung in seinem Querschnitt bzw. Durchmesser nicht vergrößert werden muss, um ein Hindurchführen des Bauelements durch seine Bauelementdurchführung zu gewährleisten. Stattdessen können das Bauteil mit seiner Bauelementdurchführung und das Bauelement unabhängig voneinander ausgestaltet werden, ohne wie bisher darauf Rücksicht nehmen zu müssen, dass das Bauelement durch die Bauelementdurchführung des Bauteils am Ende hindurchgeführt werden muss.

Eine andere erfindungsgemäße Ausführungsform umfasst das Ausbilden eines Anschlussabschnitts (z.B. einer Rohrverbindung) an einem oder beiden Enden wenigstens einer Leitung, wobei der Anschlussabschnitt einen größeren Querschnitt oder Durchmesser als die des Bauteils aufweist, durch welchen die Leitung hindurchgeführt ist. Dies hat den Vorteil, dass die Leitung im Bereich des Bauteils einen flachen Leitungsquerschnitt aufweisen kann, jedoch im Bereich des Anschlussabschnitts einen z.B. kreisrunden Leitungsquerschnitt aufweisen kann und somit ein größerer Leitungsquerschnitt zur Verfügung steht, ohne dass wie bisher darauf Rücksicht genommen werden muss, dass die Leitungsdurchführung des Bauteils am Ende hindurchgeführt werden muss.

Gemäß der Erfindung wird auch eine aerodynamische Rippe nach Anspruch 9 bereitgestellt.

Die Erfindung wird nachfolgend anhand der in den schematischen Figuren der Zeichnungen angegebenen Ausführungsbeispiele näher erläutert. Es zeigen:
Fig. 1 eine Schnittansicht eines Ausführungsbeispiels einer aerodynamisch konturierten Rippe und ihrer Leitung gemäß der Erfindung, wobei Haltestrukturen der Rippe und der Leitung noch nicht entfernt sind;
Fig. 2 ein Schnitt A-A der Rippe und ihrer gemäß Fig. 1;
Fig. 3 ein Schnitt B-B der Rippe und ihrer Leitung gemäß Fig. 1; und
Fig. 4 eine Perspektivansicht eine Ausführungsform der erfindungsgemäßen aerodynamisch konturierten Rippe mit Leitung gemäß Fig. 1;
Fig. 5 eine Perspektivansicht einer weiteren Ausführungsform einer erfindungsgemäßen aerodynamisch konturierten Rippe mit einem Stützelement;
Fig. 6 eine Perspektivansicht einer Ausführungsform einer erfindungsgemäßen aerodynamisch konturierten Rippe mit einem anderen Stützelement;
Fig. 7 eine Perspektivansicht einer anderen Ausführungsform einer erfindungsgemäßen aerodynamisch konturierten Rippe mit einem Leitungsteil mit mehreren Leitungen;
Fig. 8 eine schematische Ansicht eines Ausführungsbeispiels des erfindungsgemäßen Herstellungsverfahrens; und
Fig. 9 ein Ablaufdiagramm einer Ausführungsform des erfindungsgemäßen Herstellungsverfahrens.

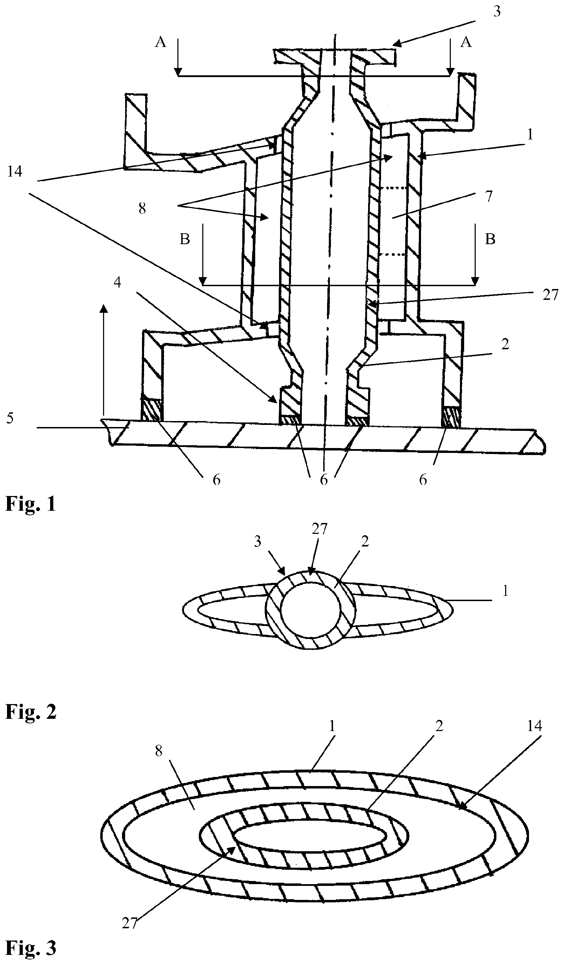

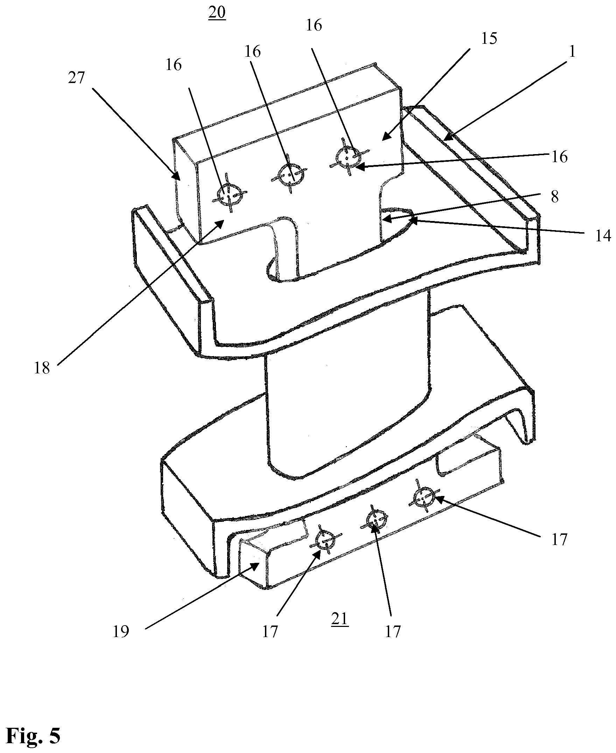

In Fig. 1 ist eine Schnittansicht einer erfindungsgemäßen aerodynamisch konturierten Rippe 1 mit einer Leitung 2 gezeigt, die mittels des erfindungsgemäßen Verfahrens hergestellt wurde. Die Leitung 2 stellt dabei ein Beispiel für ein Bauelement 27 dar, welches durch die Rippe 1 hindurchgeführt wird. Neben einer Leitung 2 kann als Bauelement 27 beispielsweise auch ein Stützelement oder ein Leitungsteil mit mehreren Leitungen vorgesehen werden, wie im Nachfolgenden anhand der Fig. 5, 6 und 7 gezeigt und erläutert wird.

Bisher tritt das Problem auf, dass durch Rippen 1, insbesondere aerodynamische Rippen, Leitungen 2, beispielsweise für Öl, mit einem bestimmten Querschnitt hindurchgeführt werden müssen, wobei sich die Rippe 1 und die Leitung 2 dabei nicht berühren sollen, aufgrund der Temperatur der Rippe 1. Hierbei geht ein normalerweise kreisrunder Querschnitt der Leitung 2 jedoch nicht durch die z.B. ovale Rippe, wie in dem Schnitt in nachfolgender Fig. 2 gezeigt ist.

Außerdem ist auf der Ober- und Unterseite der Rippe 1 gleichzeitig jeweils ein kreisrunder Anschluss 3, 4 für die Leitung 2 vorzusehen. Daraus folgt nun, dass entweder die Leitung 2 nicht durch das Innere der Rippe 1 gesteckt werden kann oder der Querschnitt der Rippe 1 sehr stark vergrößert werden muss, mit der Folge von hieraus resultierenden aerodynamischen Nachteilen für die Rippe 1.

Ein Beispiel für eine aerodynamische oder aerodynamisch konturierte Rippe 1, welche mit wenigstens einer Leitung 2 zu versehen ist, ist eine Rippe 1 eines Turbinenaustrittsgehäuses (TEC bzw. Turbine Exit Case) einer Gasturbine eines Flugzeugtriebwerks, wie sie in dem Ausführungsbeispiel in Fig. 1 illustriert ist.

Bisher ausgeführte Turbinenaustrittsgehäuse (TEC's) mit Ölleitungen haben den Nachteil, dass ihre Rippen verhältnismäßig dick sind, um die Leitungen hindurchzuführen.

Gemäß der Erfindung werden daher die jeweilige Leitung 2 als Bauelement 27 und die Rippe 1 als Bauteil mit einer Bauelementdurchführung 14 für die zugehörige Leitung 2 gleichzeitig aufgebaut, wie in dem Ausführungsbeispiel in Fig. 1 illustriert ist. In der Bauelementdurchführung 14, welche als Durchführung für die Leitung 2 als Bauelement 27 dient, können dabei eine oder mehrere Leitungen 2 vorgesehen werden. Ebenso können auch mehrere Bauelementdurchführungen 14 in der Rippe ausgebildet sein, wobei in jeder der Bauelementdurchführungen wenigstens eine Leitung hindurchgeführt werden kann.

In Fig. 1 ist dabei eine Grundplatte 5 oder ein Träger gezeigt, auf welcher schichtweise die Rippe 1 mit ihrer Bauelementdurchführung 14 zum Hindurchführen wenigstens einer Leitung und die wenigstens eine Leitung 2 gemeinsam durch ein generatives Verfahren hergestellt werden. Zu generativen Herstellungsverfahren gehört z.B. das sog. Rapid Manufacturing und das sog. Rapid Prototyping. Bei der generativen Fertigung werden Bauteile insbesondere schichtweise durch Materialauftrag aufgebaut. Dabei wird bei den entsprechenden Verfahren, die als Lasersintern, Selective Laser Sintering (SLS), Elektronenstrahlsintern, Electron Beam Melting (EBM), Laser-Cusing, Selective Laser Melting (SLM) oder 3D-Printing bekannt sind, der hinzuzufügende oder aufzutragende Werkstoff in Pulverform verarbeitet. Das Pulver wird dabei z.B. schichtweise auf die Grundplatte 5 oder den Träger aufgetragen. Anschließend wird die Pulverschicht zum Ausbilden des Bauteils selektiv mittels einer Energiestrahlung verfestigt, wie z.B. eines Laserstrahls und/oder Elektronenstrahls. Die Verfestigung der jeweiligen Pulverschicht erfolgt dabei üblicherweise auf Basis von Geometriedaten des herzustellenden Bauteils.

Dabei kann der Bereich der Pulverschicht z.B. abgescannt und der zu der entsprechenden Bauteilschicht gehörende Abschnitt mittels Energiestrahlung verfestigt werden. Durch Einwirken der Energiestrahlung schmilzt oder versintert das Pulver in diesem Bereich. Im Fall des 3D-Printings wird die Pulverschicht verfestigt, indem ein Binder selektiv in die zum Bauteil gehörenden Bereiche eingebracht wird. Anschließend kann beispielsweise die Grundplatte oder der Träger um eine Schichtdicke verfahren, z.B. abgesenkt, werden. Daraufhin wird eine neue Pulverschicht darüber aufgetragen und wiederum verfestigt. Auf diese Weise kann Schicht für Schicht die Rippe mit der Leitung aufgebaut werden.

Von der Grundplatte 5 aus werden die Rippe 1, ihre Bauelementdurchführung 14 und die in der Bauelementdurchführung 14 befindliche Leitung 2 (nach oben in Pfeilrichtung in Fig. 1) gleichzeitig miteinander durch das generative Verfahren so aufgebaut, dass sich die Leitung 2 bereits in ihrer vorgegebenen oder richtigen Lage in der Rippe 1 bzw. deren Bauelementdurchführung 14 befindet.

Die Positionierung der Rippe 1 bzw. deren Bauelementdurchführung 14 und der Leitung 2 zueinander kann dabei, wie in dem Ausführungsbeispiel in Fig. 1 gezeigt ist, durch ebenfalls mit hergestellte Haltestrukturen 6 sichergestellt werden. Diese Haltestrukturen 6 werden nach Ende des Herstellungsprozesses entfernt. Gegebenenfalls kann auch nach demselben Verfahren eine Strukturrippe 7 zwischen Rippe 1 und Leitung 2 ausgebildet werden, wie mit einer gepunkteten Linie in dem Ausführungsbeispiel in Fig. 1 angedeutet ist. Die Strukturrippe 7 kann dabei wahlweise zusätzlich auch mit einer Sollbruchstelle versehen werden, so dass die Strukturrippe 7 das Bauelement 27 zunächst in der Rippe 1 in einer Position fest fixiert, wobei die Strukturrippe 7 später an ihrer Sollbruchstelle durchgebrochen werden kann, so dass das Bauelement 27 relativ zu der Rippe 1 beispielsweise etwas beweglich ist.

Der Vorteil der Erfindung ist, dass für die notwendigen Leitungsquerschnitte wesentlich schlankere Rippen 1 ausgebildet werden können, was sich auf die Aerodynamik und den Wirkungsgrad der Komponenten sehr positiv auswirkt. Ebenso kann der Abstand zwischen zum Beispiel einer heißen Rippe 1 und einer wärmeempfindlichen Leitung 2 vergrößert werden und/oder ein Zwischenraum 8 zwischen der Rippe 1 und der Leitung 2 mit einem geeigneten Isolationsmaterial (nicht dargestellt) ausgefüllt werden, z.B. einer Wärmedämmschicht, insbesondere einer porösen Wärmedämmschicht, um eine Isolierschicht zwischen der Rippe 1 und der Leitung 2 vorzusehen. Eine Isolierschicht kann beispielsweise als eine Hülle z.B. um die Leitung 2 ausgebildet werden. Die Isolierschicht als Hülle kann teilweise oder vollständig umlaufend zwischen der Rippe 1 und der Leitung 2 angeordnet und integral gefertigt sein. Alternativ kann die Isolierschicht aber auch den Zwischenraum 8 zwischen der Rippe 1 und der Leitung 2 zumindest teilweise oder ganz ausfüllen, beispielsweise mit einer Wärmedämmschicht, insbesondere einer porösen Wärmedämmschicht.

In dem Ausführungsbeispiel einer Rippe 1 mit einer Leitung 2, wie es in Fig. 1 gezeigt ist, ist die Leitung 2 durch die Rippe 1 und deren Bauelementdurchführung 14 hindurchgeführt ausgebildet und weist an ihrem oberen und unteren Ende beispielsweise jeweils einen entsprechenden Anschlussabschnitt 3, 4 auf, z.B. einen kreisrunden Anschlussabschnitt 3, 4 wie auch in nachfolgendem Schnitt A-A in Fig. 2 gezeigt ist. An den Anschlussabschnitt kann beispielsweise ein Temperiermedium zum Kühlen und/oder Heizen angeschlossen werden, beispielsweise Öl, Wasser oder ein Gas.

Zur Positionierung der Leitung 2 relativ zu der Rippe 1 und ihrer Bauelementdurchführung 14 können bei Bedarf beispielsweise an dem Ende der Rippe 1 und/oder an dem Ende der Leitung 2 entsprechende Haltestrukturen 6 ausgebildet sein derart, dass die Leitung 2 innerhalb der Rippe 1 und ihrer Bauelementdurchführung 14 in einer vorgegebenen Position, insbesondere endgültigen Position, positioniert ist, wie in dem Ausführungsbeispiel in Fig. 1 gezeigt ist. Dabei kann die Leitung 2 derart innerhalb der Rippe 1 positioniert sein, dass beispielsweise ein Zwischenraum 8 oder Spalt, wie z.B. ein umlaufender Spalt, zwischen der Leitung 2 und der Rippe 1 bzw. ihrer Bauelementdurchführung 14 vorgesehen ist, so dass die Leitung 2 die Rippe 1 nicht berührt. Ebenso kann beispielsweise zwischen der Leitung 2 und der Rippe 1, wie mit einer gepunktete Linie in dem Ausführungsbeispiel in Fig. 1 gezeigt ist, wenigstens eine Strukturrippe 7 ausgebildet sein. Wie zuvor beschrieben, werden für den Fall, dass Halterstrukturen 6 vorgesehen werden, wie in dem Ausführungsbeispiel in Fig. 1 gezeigt ist, diese anschließend wieder entfernt, z.B. abgefräst usw..

In Fig. 2 ist ein Schnitt A-A der Rippe 1 als Bauteil gemäß dem Ausführungsbeispiel in Fig. 1 gezeigt. Wie aus dem Schnitt A-A entnommen werden kann, weist die Leitung 2 als Bauelement 27 ein oberes Ende auf, welches einen größeren Querschnitt aufweist als die Rippe 1. Das obere Ende der Leitung ist dabei beispielsweise als Anschlussabschnitt 3 ausgebildet und weist z.B. einen kreisförmigen Querschnitt auf, wohingegen die Rippe 1 einen kleineren z.B. ovalen Querschnitt aufweist.

Fig. 3 zeigt einen Schnitt B-B der Rippe 1 gemäß dem Ausführungsbeispiel in Fig. 1. Hierbei weist die Leitung 2 als Bauelement 27 im Inneren der Rippe 1 (Bauteil) einen kleineren Querschnitt auf als die Rippe 1, wobei ein beispielsweise umlaufender Spalt oder Zwischenraum 8 zwischen der Leitung 2 und der Rippe 1 bzw. deren Bauelementdurchführung 14 ausgebildet ist. Dadurch kann sichergestellt werden, dass die Leitung 2 beispielsweise die heiße Rippe 1 nicht berührt, im Falle einer Rippe 1 eines Turbinenaustrittsgehäuses (TEC) einer Gasturbine eines Flugzeugtriebwerks.

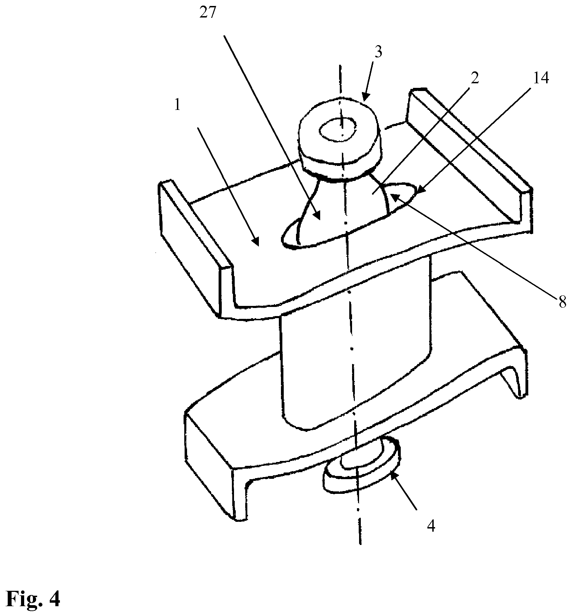

In Fig. 4 ist eine Perspektivansicht einer erfindungsgemäßen Rippe 1 (Bauteil) und ihrer Leitung 2 (Bauelement 27) gezeigt vergleichbar dem Ausführungsbeispiel in Fig. 1, 2 und 3. Die Rippe 1 weist dabei die Leitung 2 auf, deren beide Enden beispielsweise Anschlussabschnitte 3, 4 bilden. Die Leitung 2 ist dabei durch die Bauelementdurchführung 14 der Rippe 1 geführt. Die Anschlussabschnitte 3, 4 können dabei jeweils einen größeren Querschnitt aufweisen als die Rippe 1 und ihre Bauelementdurchführung 14, so dass die Leitung 2, wenn sie nicht gemäß der Erfindung zusammen mit der Rippe 1 hergestellt worden wäre, nicht in die Rippe 1 und deren Bauelementdurchführung 14 später eingeführt werden könnte. Des Weiteren weist die Leitung 2 innerhalb der Rippe 1 wiederum einen kleineren Querschnitt als die Rippe 1 auf und bildet mit der Rippe 1 einen Spalt oder Zwischenraum 8, so dass die Leitung 2 die Rippe 1 im Inneren nicht berührt.

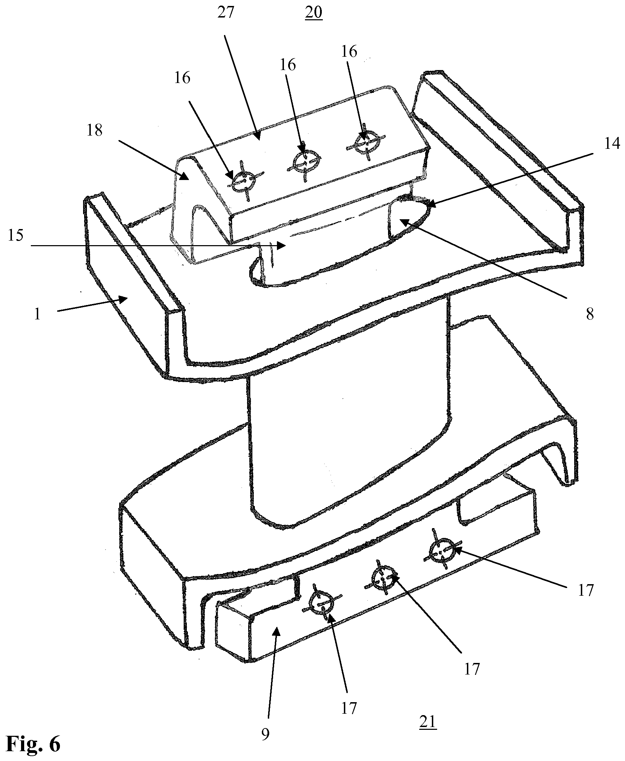

Des Weiteren ist in den Fig. 5 und 6 jeweils eine Perspektivansicht einer weiteren erfindungsgemäßen Rippe 1 mit einem Stützelement oder Strebe 18 als weiterem Beispiel für ein Bauelement 27 gezeigt. Bei den beiden gezeigten Ausführungsbeispielen wie sie in Fig. 5 und 6 gezeigt sind, befindet sich statt einer Leitung als Bauelement das Stützelement 15 zur Kraftübertragung im Inneren der Rippe 1. Das Stützelement 15 wird dabei durch eine Bauelementdurchführung 14 in der Rippe 1 geführt, vergleichbar der Leitung in dem Ausführungsbeispiel in Fig. 1. Das Stützelement 15 kann z.B. dazu verwendet werden, um Lagerkräfte aus beispielsweise wenigstens einem in Inneren 21 der Rippe 1 befindlichen Lager nach außen 20 zu leiten. Die Erfindung ist aber auf diese spezielle Ausführungsform nicht beschränkt. Das Stützelement 15 kann auch zur Übertragung jeder anderen Kraft neben einer Lagerkraft vorgesehen sein.

Das Stützelement 15 weist, wie in den Ausführungsbeispielen in Fig. 5 und 6 gezeigt ist, einen ersten oder äußeren Befestigungsflansch 18 und einen zweiten oder inneren Befestigungsflansch 19 auf. Jeder der Befestigungsflansche 18, 19 kann, wie in Fig. 5 und 6 gezeigt ist, z.B ein oder mehrere Befestigungsbohrungen 16 bzw. 17 aufweisen zum Verbinden des Stützelements 15 mittels seiner Befestigungsflansche 18, 19 mit anderen Teilen, z.B. benachbarten Teilen.

Das Stützelement 15 wird als Beispiel für ein Bauelement 27 in den Ausführungsbeispielen der Erfindung in den Fig. 5 und 6, wie zuvor die Leitung in den Ausführungsbeispielen in den Fig. 1 bis 4 durch die Bauelementdurchführung 14 in der Rippe 1 hindurchgeführt.

Die Ausführungsbeispiele der Erfindung, wie sie in den Fig. 5 und 6 gezeigt sind, unterscheiden sich lediglich dadurch voneinander, dass die Flansche 18 und 19 verschieden ausgebildet sind, je nach Funktion und Einsatzzweck. Die beiden Flansche 18, 19 in dem Ausführungsbeispiel in Fig. 5 sind beispielsweise in einer Längsebene der Rippe vorgesehen. In dem Ausführungsbeispiel in Fig. 6 sind die Flansche 18, 19 beispielsweise wiederum in einer Ebene z.B. senkrecht zu einer Längsebene der Rippe 1 vorgesehen.

Das generative Aufbauen des Stützelements 15 als Bauelement 27 mit seinen Flanschen 18, 19 (die jeweils eine größere räumliche Erstreckung als die Bauelementdurchführung 14 aufweisen) zusammen mit der Rippe 1 als Bauteil hat den Vorteil, dass die Bauelementdurchführung 14 der Rippe 1 nicht derart groß ausgebildet werden muss, um wie bisher anschließend das Stützelement 15 mit seinen Flanschen 18, 19 hindurchführen zu können. Stattdessen werden das Stützelement 15 und die Rippe 1 gemeinsame oder integral aufgebaut.

Dabei können, wie zuvor beispielsweise mit Bezug auf Fig. 1 beschrieben wurde, wahlweise zusätzlich wenigstens eine Haltestruktur, wenigstens eine Strukturrippe und/oder eine Isolierschicht in einem Zwischenraum 8 zwischen dem Stützelement 15 und der Rippe 1 vorgesehen sein. Wie zuvor ebenfalls mit Bezug auf Fig. 1 beschrieben wurde, kann auch bei den Ausführungsbeispielen in den Fig. 5 und 6 die Isolierschicht als eine Hülle ausgebildet sein, die zumindest teilweise umlaufend oder vollständig umlaufend um das Stützelement 15 zwischen der Rippe 1 und dem Stützelement 15 angeordnet und insbesondere integral gefertigt ist. Alternativ kann die Isolierschicht aber auch den Zwischenraum 8 zwischen der Rippe 1 und dem Stützelement 15 zumindest teilweise oder vollständig auffüllen. Als Isolierschicht kann eine Wärmedämmschicht, z.B. eine poröse Wärmedämmschicht, vorgesehen werden.

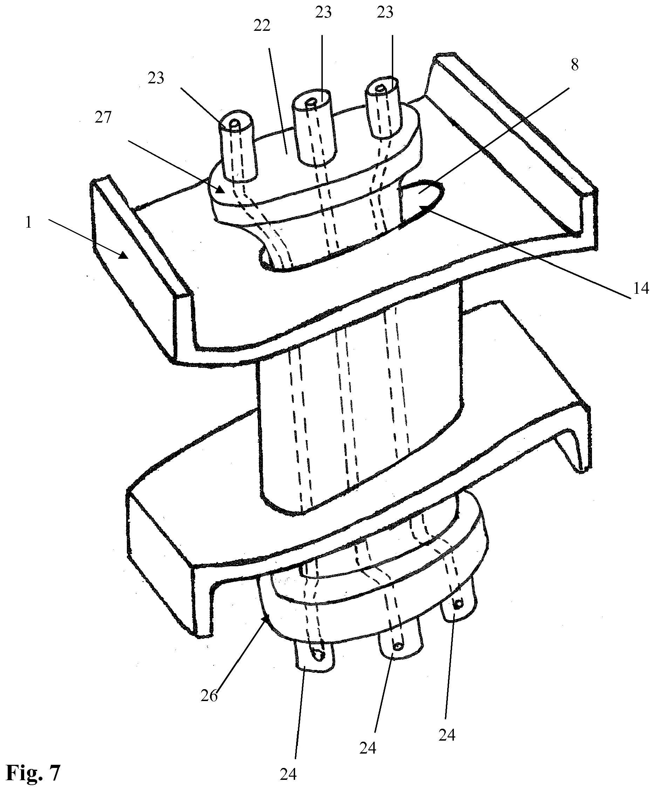

In Fig. 7 ist eine Perspektivansicht einer weiteren erfindungsgemäßen Ausführungsform einer Rippe 1 als Bauteil und eine Leitungsteil 22 als Bauelement 27 mit mehreren Leitungen 2 gezeigt. Das Leitungsteil 22 als Beispiel für ein Bauelement 27 ist dabei eine Bauelementdurchführung 14 in der Rippe 1 hindurchgeführt.

Die Leitungen 2 sind dabei in einem gemeinsamen Leitungsteil 22 ausgebildet. Das Leitungsteil 22 weist hierbei z.B. mindestens zwei Kanäle auf, welche die mindestens zwei Leitungen 2 bilden. Das Leitungsteil 22 ist so ausgebildet, dass es durch die Rippe 1 bzw. die Bauelementdurchführung 14 der Rippe 1 verläuft. Das Leitungsteil 22 ist dabei an seinen beiden Ende außerhalb der Bauelementdurchführung 14 verbreitert oder weist einen größeren Durchmesser und einen größeren Querschnitt als die Bauelementdurchführung 14 auf, dass erste oder obere Leitungsanschlüsse 23 und zweite oder untere Leitungsanschlüsse 24 an den Enden Platz finden. Diese Leitungsanschlüsse 23, 24 können, wie in dem Ausführungsbeispiel in Fig. 7 gezeigt ist, auf den Stirnseiten der Enden oder seitlich an dem Enden des Leitungsteils 22 angeordnet sein.

Wie zuvor z.B. mit Bezug auf das Ausführungsbeispiel in Fig. 1 beschrieben wurde kann wahlweise zusätzlich wenigstens eine Haltestruktur, wenigstens eine Strukturrippe und/oder eine Isolierschicht in einem Zwischenraum 8 zwischen dem Leitungsteil 22 und der Rippe 1 vorgesehen sein. Wie zuvor ebenfalls mit Bezug auf Fig. 1 beschrieben wurde, kann auch bei den Ausführungsbeispiel in Fig. 7 die Isolierschicht als eine Hülle ausgebildet sein, die zumindest teilweise umlaufend oder vollständig umlaufend um das Leitungsteil 22 zwischen der Rippe 1 und dem Leitungsteil 22 angeordnet und insbesondere integral gefertigt ist. Alternativ kann die Isolierschicht aber auch den Zwischenraum 8 zwischen der Rippe 1 und dem Leitungsteil 22 zumindest teilweise oder vollständig auffüllen. Als Isolierschicht kann eine Wärmedämmschicht, z.B. eine poröse Wärmedämmschicht, vorgesehen werden.

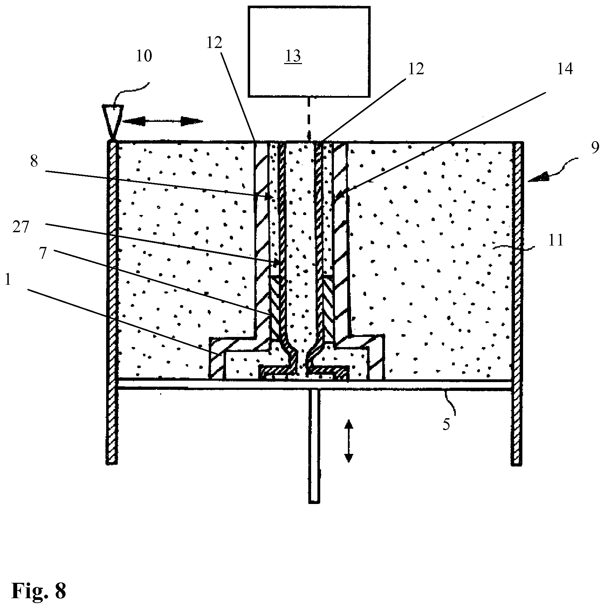

In Fig. 8 ist eine schematische Ansicht eines Ausführungsbeispiels des erfindungsgemäßen Herstellungsverfahrens gezeigt. Dabei ist beispielsweise eine auf und ab bewegliche Grundplatte 5 vorgesehen, die durch einen Rahmen 9 begrenzt ist, so dass ein Pulver 11 auf der Grundplatte 5 aufgenommen werden kann. Über eine Beschichtungseinrichtung 10 wird Pulver 11 auf die Grundplatte 5 insbesondere schichtweise aufgetragen. Die Beschichtungseinrichtung 10 kann dabei beispielsweise eine Abstreifervorrichtung, wie in dem Ausführungsbeispiel in Fig. 8 gezeigt ist, ein Rakel und/oder wenigstens eine Pulverzuführdüse usw. aufweisen.

Nach dem Auftragen der Pulverschicht auf die Grundplatte 5, wird die Pulverschicht in dem oder den Bauteilbereichen 12 mittels einer Energiestrahlungsquelle 13, wie beispielsweise einem Laser oder einer Elektronenstrahlquelle, verfestigt. Die Bauteilbereiche 12 die hierbei in dem in Fig. 8 gezeigten Ausführungsbeispiel verfestigt werden sind der Bauteilbereich für die Rippe 1 (Bauteil) und deren Bauelementdurchführung 14 und der Bauteilbereich für das Bauelement 27 (z.B. eine Leitung, ein Leitungsteil mit wenigstens zwei Leitungen oder ein Stützelement), sowie der Bauteilbereich für eine zusätzliche Strukturrippen 7 zwischen der Rippe 1 und dem Bauelement 27. In dem Fall, dass beispielsweise zusätzliche Haltestrukturen vorgesehen sind, wie in dem in Fig. 1 gezeigten Ausführungsbeispiel, wird auch der Bauteilbereich für die Haltestruktur mittels der Energiestrahlungsquelle 13 verfestigt.

Anschließend wird die Grundplatte 5 um eine Pulverschicht nach unten bewegt, um die nächste Pulverschicht durch die Beschichtungseinrichtung 10 aufzubringen und danach die Bauteilbereiche 12 der Rippe 1, des Bauelements 2 und gegebenenfalls der Strukturrippe 7 durch die Energiestrahlungsquelle 13 verfestigt.

Das Pulver 11 zum Aufbringen mittels der Beschichtungseinrichtung 10 kann, je nachdem was für ein Bauteil hergestellt werden soll, aus einem oder mehreren Werkstoffen zusammengesetzt sein, beispielsweise kann das Pulver wenigstens ein Metallpulver, ein Metalllegierungspulver, ein Keramikpulver und/oder auch ein Kunststoffpulver aufweisen, um nur einige Beispiele für das Pulver zu nennen. Die Erfindung ist auf diese Beispiele aber nicht beschränkt, Grundsätzlich kann jedes Pulver 11 aus einem Werkstoff oder einer Werkstoffkombination verwendet werden, das geeignet ist mittels einer Energiestrahlungsquelle 13, wie z.B. einem Elektronenstrahl oder einem Laserstrahl, verfestigt zu werden.

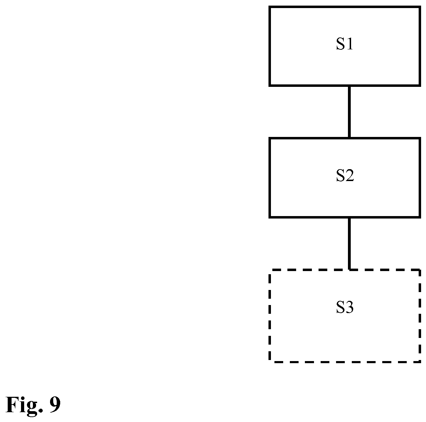

Fig. 9 zeigt ein Ablaufdiagramm eines Ausführungsbeispiels des erfindungsgemäßen Verfahrens zur Herstellung einer Rippe mit einem darin angeordneten Bauelement, nämlich einer Leitung, einem Leitungsteil mit wenigstens zwei Leitungen oder einem Stützelement. Dabei wird in einem ersten Schritt S1 auf eine Grundplatte eine Pulverschicht mittels einer Beschichtungseinrichtung aufgetragen. Anschließend wird die Pulverschicht in einem vorbestimmten Bauteilbereich der Rippe einschließlich der Bauelementdurchführung der Rippe und in einem vorbestimmten Bauteilbereich des Bauelements, mittels Energiestrahlung einer Energiestrahlungsquelle verfestigt. Innerhalb der Rippe kann dabei ein Zwischenraum oder Spalt zwischen dem Bauteilbereich der Rippe und dem Bauteilbereich des Bauelements vorgesehen werden, welcher nicht verfestigt wird mittels Energiestrahlung. Das Pulver aus diesem Zwischenraum kann später nach der Herstellung des fertigen Bauteils entfernt und der Zwischenraum gegebenenfalls durch ein geeignetes Isolationsmaterial aufgefüllt werden, um beispielsweise die Rippe gegenüber dem Bauelement zu isolieren.

Anschließend wird in einem nächsten Schritt S2 die Grundplatteform um eine Pulverschicht abgesenkt und die nächste Pulverschicht aufgetragen und in den vorbestimmten Bauteilbereichen der Rippe und dem Bauelement mittels Energiestrahlung verfestigt. Der Schritt S2 wird wiederholt bis am Ende alle Bauteilbereiche aus denen die Rippe und ihr Bauelement aufgebaut sind verfestigt wurden.

Im Falle, dass wenigstens eine Halterstruktur und/oder eine Strukturrippe vorgesehen sind, wird der entsprechende Bauteilbereich in dem Schritt S1 und/oder dem Schritt S2 hierfür mittels Energiestrahlung verfestigt.

In einem zusätzlichen Schritt S3 kann dann eine vorhandene Haltestruktur nach dem Fertigstellen der Rippe und ihrem Bauelement entfernt werden, z.B. durch Fräsen, Drehen, Absägen usw..

Das erfindungsgemäße Verfahren umfasst sowohl die vollständige Herstellung, eine Reparatur und/oder einen Austausch des Bauteils mit seiner Leitungsdurchführung und der wenigstens einen Leitung. Dies gilt für alle Ausführungsformen der Erfindung.

### Bezugszeichenliste

- 1: Rippe
- 2: Leitung
- 3: erster Anschluss
- 4: zweiter Anschluss
- 5: Grundplatte
- 6: Haltestruktur
- 7: Strukturrippe
- 8: Zwischenraum
- 9: Rahmen
- 10: Beschichtungseinrichtung
- 11: Pulver
- 12: Bauteilbereich
- 13: Energiestrahlungsquelle
- 14: Bauelementdurchführung
- 15: Stützelement zur Kraftübertragung
- 16: Befestigungsbohrung
- 17: Befestigungsbohrung
- 18: Befestigungsflansch
- 19: Befestigungsflansch
- 20: Bereich außen
- 21: Bereich innen
- 22: Leitungsteil
- 23: Anschluss (Leitung)
- 24: Anschluss (Leitung)
- 25: Anschlussabschnitt
- 26: Anschlussabschnitt
- 27: Bauelement

## Patentansprüche

1. Verfahren zum Herstellen eines Bauteils (1) mit wenigstens einem in dem Bauteil (1) angeordneten Bauelement (27, 2, 22, 15), nämlich wenigstens einer in einer aerodynamischen Rippe angeordneten Leitung (2), einem Leitungsteil (22) oder einem Stützelement (15), wobei das Bauteil (1) eine Bauelementdurchführung (14) aufweist zum Hindurchführen des wenigstens einen Bauelements (27, 2, 22, 15), wobei das Verfahren die folgenden Schritte aufweist:
Schichtweises Aufbauen des Bauteils (1) mit der Bauelementdurchführung (14) zusammen mit dem wenigstens einen Bauelement (27, 2, 22, 15) mittels eines generativen Fertigungsverfahrens und
Ausbilden des wenigstens einen Bauelements (27, 2, 22, 15) an beiden Enden desselben mit einem Anschlussabschnitt (3, 4; 23, 24) und/oder einem Befestigungsflansch (18, 19), wobei der Anschlussabschnitt (3, 4) bzw. der Befestigungsflansch (18, 19) einen größeren Querschnitt oder einen größeren Durchmesser als die Bauelementdurchführung (14) des Bauteils (1) aufweist.

2. Verfahren nach Anspruch 1, **dadurch gekennzeichnet, dass** das Verfahren ferner den Schritt aufweist:
Ausbilden eines Zwischenraums (8) zwischen der Bauelementdurchführung (14) und dem wenigstens einen Bauelement (27, 2, 22, 15).

3. Verfahren nach wenigstens einem der vorhergehenden Ansprüche, **dadurch gekennzeichnet, dass** das Verfahren ferner den Schritt aufweist:
Ausbilden einer Haltestruktur (6) an dem Bauelement (27, 2, 22, 15) und/oder dem Bauteil (1) zum Positionieren des Bauelements (27, 2, 22, 15) in der Bauelementdurchführung (14) des Bauteils (1) in einer vorbestimmten Position.

4. Verfahren nach wenigstens einem der vorhergehenden Ansprüche, **dadurch gekennzeichnet, dass** das Verfahren ferner den Schritt aufweist:
Ausbilden wenigstens einer Strukturrippe (7) zwischen der Bauelementdurchführung (14) des Bauteils (1) und dem wenigstens einen Bauelement (27, 2, 22, 15).

5. Verfahren nach wenigstens einem der vorhergehenden Ansprüche, **dadurch gekennzeichnet, dass** das Verfahren ferner den Schritt aufweist:
zumindest teilweises Auffüllen des Zwischenraums (8) zwischen der Bauelementdurchführung (14) des Bauteils (1) und dem wenigstens einen Bauelement (27, 2, 22, 15) mit einem Isolationsmaterial.

6. Verfahren nach wenigstens einem der vorhergehenden Ansprüche, **dadurch gekennzeichnet, dass** das Verfahren ferner den Schritt aufweist:
Ausbilden des Zwischenraums (8) zwischen der Bauelementdurchführung (14) des Bauteils (1) und dem wenigstens einen Bauelement (27, 2, 22, 15) in zumindest teilweise oder vollständig um das Bauelement (27, 2, 22, 15) umlaufender Weise.

7. Verfahren nach wenigstens einem der vorhergehenden Ansprüche, **dadurch gekennzeichnet, dass** das Bauteil (1) als eine aerodynamische Rippe eines Turbinenaustrittsgehäuses einer Gasturbine eines Flugzeugtriebwerks ausgebildet und das Bauelement eine Leitung (2), ein Leitungsteil (22) mit wenigstens zwei Leitungen (2) und/oder ein Stützelement (15), insbesondere ein Stützelement (15) zur Kraftübertragung ist, und die Leitung (2) als eine Leitung (2) zum Hindurchleiten eines Temperiermediums, insbesondere eines Kühlmediums wie Öl oder Wasser oder Luft, ausgebildet ist.

8. Verfahren nach wenigstens einem der vorhergehenden Ansprüche, **dadurch gekennzeichnet, dass** der Schritt des schichtweisen Aufbauens des Bauteils aufweist:
Schichtweises Aufbauen des Bauteils (1) mit der Bauelementdurchführung (14) zusammen mit mehreren Bauelementen (27) mittels eines generativen Fertigungsverfahrens, wobei die Bauelemente (27) getrennt voneinander oder als ein gemeinsames Bauelementteil (22) ausbildbar sind und die Bauelemente (27) insbesondere Leitungen (2) sind.

9. Bauteil (1), hergestellt mit dem Verfahren gemäß einem der Ansprüche 1 bis 8, aufweisend wenigstens ein in dem Bauteil (1) angeordnetes Bauelement (27, 2, 22, 15), nämlich wenigstens eine in einer aerodynamischen Rippe angeordnete Leitung (2), ein Leitungsteil (22) oder ein Stützelement (15), wobei der Querschnitt des wenigstens einen Bauelements (27, 2, 22, 15) im Inneren der Bauelementdurchführung (14) des Bauteils (1) kleiner als der Querschnitt der Bauelementdurchführung (14) ausgebildet ist und wobei der Querschnitt oder Durchmesser wenigstens eines Abschnitts des wenigstens einen Bauelements (27, 2, 22, 15) außerhalb der Bauelementdurchführung (14) des Bauteils (1) größer als der Querschnitt oder der Durchmesser der Bauelementdurchführung (14) ausgebildet ist, wobei der wenigstens eine Abschnitt als ein Anschlussabschnitt (3, 4, 23, 24) oder als ein Befestigungsflansch (18, 19) des Bauelements (27) ausgebildet ist, wobei der Anschlussabschnitt (3, 4, 23, 24) insbesondere zum Anschließen eines Temperiermediums ausgebildet ist und der Befestigungsflansch (18, 19)insbesondere zum Befestigen wenigstens eines weiteren Teils ausgebildet ist.

10. Bauteil nach Anspruch 9, **dadurch gekennzeichnet, dass** das Bauteil (1) mit der Bauelementdurchführung (14) zusammen mit mehren Bauelementen (27) ausgebildet ist, wobei die Bauelemente (27) getrennt voneinander oder als ein gemeinsames Bauelementteil (22) ausgebildet sind und das Bauelementteil (22) insbesondere mehrere Leitungen (2) als Bauelemente (27) aufweist und vorzugsweise einen Anschluss (23, 24) für jede Leitung (2).

11. Bauteil nach einem der Ansprüche 9 oder 10, **dadurch gekennzeichnet, dass** das Bauelement (27, 2, 22, 15) eine Leitung (2), ein Leitungsteil (22) mit wenigstens zwei Leitungen (2) oder ein Stützelement (15), insbesondere ein Stützelement (15) zur Kraftübertragung, ist.

## Claims

1. A method for the production of a component (1) having at least one element (27, 2, 22, 15) arranged in the component (1), specifically at least one conduit (2) arranged in an aerodynamically contoured rib, a conduit part (22), or a support element (15), wherein the component (1) has an element passage (14) through which the at least one element (27, 2, 22, 15) passes, wherein the method comprises the following steps:
constructing the component (1), with the element passage (14), together with the at least one element (27, 2, 22, 15), in layers by means of a generative production process, and forming the at least one element (27, 2, 22, 15) on both ends of the same with a connector segment (3, 4; 23, 24) and/or a fastening flange (18, 19), wherein the connector segment (3, 4) and/or the fastening flange (18, 19) has/have a larger cross-section or a great diameter than the element passage (14) of the component (1).

2. The method according to claim 1, **characterized in that** the method further includes the step of:
forming an intermediate space (8) between the element passage (14) and the at least one element (27, 2, 22, 15).

3. The method according to at least one of the previous claims, **characterized in that** the method further includes the step of:
forming a retaining structure (6) in a predefined position on the element (27, 2, 22, 15) and/or the component (1) for positioning the element (27, 2, 22, 15) in the element passage (14) of the component (1).

4. The method according to at least one of the previous claims, **characterized in that** the method further includes the step of:
forming at least one structural rib (7) between the element passage (14) of the component (1) and the at least one element (27, 2, 22, 15).

5. The method according to at least one of the previous claims, **characterized in that** the method further includes the step of:
at least partially filling in the intermediate space (8) between the element passage (14) of the component (1) and the at least one element (27, 2, 22, 15) with an insulation material.

6. The method according to at least one of the previous claims, **characterized in that** the method further includes the step of:
forming the intermediate space (8) between the element passage (14) of the component (1) and the at least one element (27, 2, 22, 15) in a manner running at least partially, or completely, around the element (27, 2, 22, 15) circumference.

7. The method according to at least one of the previous claims, **characterized in that** the component (1) is designed as an aerodynamically contoured rib of a turbine exit case of a gas turbine of an aircraft engine, and the element is a conduit (2), a conduit part (22) having at least two conduits (2), and/or a support element (15), particularly a support element (15) which transmits force, and the conduit (2) is designed as a conduit (2) through which a temperature control medium, particularly a cooling medium such as oil or water or air, is conveyed.

8. The method according to at least one of the previous claims, **characterized in that** the step of constructing the component in layers includes:
constructing the component (1), with the element passage (14), together with a plurality of elements (27), in layers by means of a generative production process, wherein the elements (27) can be formed separately from each other, or as a single element part (22), and the elements (27) are particularly conduits (2).

9. A component (1) produced by the method according to any one of the claims 1 to 8, comprising at least one element (27, 2, 22, 15) arranged in the component (1), specifically at least one conduit (2) arranged in an aerodynamically contoured rib, a conduit part (22), or a support element (15), wherein the cross-section of the at least one element (27, 2, 22, 15) in the interior of the element passage (14) of the component (1) is smaller than the cross-section of the element passage (14), and wherein the cross-section or diameter of at least one section of the at least one element (27, 2, 22, 15) outside of the element passage (14) of the component (1) is greater than the cross-section or the diameter of the element passage (14), wherein the at least one section is designed as a connector section (3, 4, 23, 24) or as a fastening flange (18, 19) of the element (27), wherein the connector section (3, 4, 23, 24) is particularly designed for feeding a temperature control medium, and the fastening flange (18, 19) is particularly designed for fastening at least one further part.

10. The component according to claim 9, **characterized in that** the component (1) is formed, with the element passage (14), together with a plurality of elements (27), wherein the elements (27) are formed separately from each other or as a single element part (22), and the element part (22) particularly comprises a plurality of conduits (2) as elements (27), and preferably one connector (23, 24) for each conduit (2).

11. The component according to any one of the claims 9 or 10, **characterized in that** the element (27, 2, 22, 15) is a conduit (2), a conduit part (22) having at least two conduits (2), or a support element (15), particularly a support element (15) for transmitting force.

## Revendications

1. Procédé de fabrication d'un composant (1) doté d'au moins un élément de construction (27, 2, 22, 15) agencé dans le composant (1), à savoir au moins une conduite (2) agencée dans une nervure aérodynamique, une partie de conduite (22) ou un élément de support (15), le composant (1) présentant un passage d'élément de construction (14) pour la traversée de l'au moins un élément de construction (27, 2, 22, 15), le procédé comprenant les étapes suivantes :
le montage en couche du composant (1) avec le passage d'élément de construction (14) avec l'au moins un élément de construction (27, 2, 22, 15) au moyen d'un procédé de fabrication générative et
la formation de l'au moins un élément de construction (27, 2, 22, 15) au niveau de ses deux extrémités avec une section de raccordement (3, 4 ; 23, 24) et/ou une bride de fixation (18, 19), la section de raccordement (3, 4) ou la bride de fixation (18, 19) présentant une section transversale supérieure ou un diamètre supérieur au passage d'élément de construction (14) du composant (1).

2. Procédé selon la revendication 1, **caractérisé en ce que** le procédé comprend en outre l'étape :
de formation d'un espace intermédiaire (8) entre le passage d'élément de construction (14) et l'au moins un élément de construction (27, 2, 22, 15).

3. Procédé selon au moins l'une des revendications précédentes, **caractérisé en ce que** le procédé comprend en outre l'étape :
de formation d'une structure de maintien (6) au niveau de l'élément de construction (27, 2, 22, 15) et/ou du composant (1) pour le positionnement de l'élément de construction (27, 2, 22, 15) dans le passage d'élément de construction (14) du composant (1) dans une position prédéterminée.

4. Procédé selon au moins l'une des revendications précédentes, **caractérisé en ce que** le procédé comprend en outre l'étape :
de formation d'au moins une nervure de structure (7) entre le passage d'élément de construction (14) du composant (1) et l'au moins un élément de construction (27, 2, 22, 15).

5. Procédé selon au moins l'une des revendications précédentes, **caractérisé en ce que** le procédé comprend en outre l'étape :
de remplissage au moins partiel de l'espace intermédiaire (8) entre le passage d'élément de construction (14) du composant (1) et l'au moins un élément de construction (27, 2, 22, 15) avec un matériau d'isolation.

6. Procédé selon au moins l'une des revendications précédentes, **caractérisé en ce que** le procédé comprend en outre l'étape :
de formation de l'espace intermédiaire (8) entre le passage d'élément de construction (14) du composant (1) et l'au moins un élément de construction (27, 2, 22, 15) de manière au moins partiellement ou totalement circonférentielle autour de l'élément de construction (27, 2, 22, 15).

7. Procédé selon au moins l'une des revendications précédentes, **caractérisé en ce que** le composant (1) est conçu sous la forme d'une nervure aérodynamique d'un carter de sortie de turbine d'une turbine à gaz d'un moteur d'avion, et l'élément de construction est une conduite (2), une partie de conduite (22) dotée d'au moins deux conduites (2) et/ou un élément de support (15), en particulier un élément de support (15) pour la transmission de puissance, et la conduite (2) est conçue sous la forme d'une conduite (2) pour la traversée d'un agent de régulation thermique, en particulier d'un agent refroidissant tel que l'huile ou l'eau ou l'air.

8. Procédé selon au moins l'une des revendications précédentes, **caractérisé en ce que** l'étape de montage en couche du composant comprend :
le montage en couche du composant (1) avec le passage d'élément de construction (14) avec plusieurs éléments de construction (27) au moyen d'un procédé de fabrication générative, les éléments de construction (27) pouvant être formés séparément les uns des autres ou en tant que partie d'élément de construction commune (22) et les éléments de construction (27) étant en particulier des conduites (2).

9. Composant (1) fabriqué par le procédé selon l'une des revendications 1 à 8, présentant au moins un élément de construction (27, 2, 22, 15) agencé dans le composant (1), à savoir au moins une conduite agencée dans une nervure aérodynamique (2), une partie de conduite (22) ou un élément de support (15), la section transversale de l'au moins un élément de construction (27, 2, 22, 15) étant formée à l'intérieur du passage d'élément de construction (14) du composant (1) avec une taille inférieure à la section transversale du passage d'élément de construction (14), et la section transversale ou le diamètre d'au moins une section de l'au moins un élément de construction (27, 2, 22, 15) à l'extérieur du passage d'élément de construction (14) du composant (1) étant formée avec une taille supérieure à la section transversale ou au diamètre du passage d'élément de construction (14), l'au moins une section étant conçue sous la forme d'une section de raccordement (3, 4, 23, 24) ou de bride de montage (18, 19) de l'élément de construction (27), la section de raccordement (3, 4, 23, 24) étant conçue en particulier pour le raccordement d'un agent de régulation thermique, et la bride de montage (18, 19) étant conçue en particulier pour la fixation d'au moins une autre pièce.

10. Composant selon la revendication 9, **caractérisé en ce que** le composant (1) est formé avec la conduite d'élément de construction (14) avec plusieurs éléments de construction (27), les éléments de construction (27) étant formés séparément les uns des autres ou en tant que partie d'élément de construction commune (22), et la partie d'élément de construction (22) présentant en particulier plusieurs conduites (2) comme éléments de construction (27), et de préférence un raccordement (23, 24) pour chaque conduite (2).

11. Composant selon l'une des revendications 9 ou 10, **caractérisé en ce que** l'élément de construction (27, 2, 22, 15) est une conduite (2), une partie de conduite (22) dotée d'au moins deux conduites (2) ou un élément de support (15), en particulier un élément de support (15) pour la transmission de puissance.
